# EUROPEAN PATENT APPLICATION

(11) **EP 4 694 324 A1**
(43) Date of publication of application: **11.02.2026**
(21) Application number: 23931429.7
(22) Date of filing: 06.04.2023
(51) Int. Cl.: H04W 36/00

(54) **DISTRIBUTED UNIT MIGRATION METHOD AND CONTROL APPARATUS, AND COMMUNICATION SYSTEM**

(71) Applicant: FUJITSU LIMITED, Kawasaki-shi, Kanagawa 211-8588 (JP)
(72) Inventor: YI, Su, Beijing 100022 (CN); JIA, Meiyi, Beijing 100022 (CN); LI, Guorong, Beijing 100022 (CN)
(74) Representative: Haseltine Lake Kempner LLP
(86) International application number: PCT/CN2023/086708
(87) International publication number: WO 2024/207361

(57) **Abstract**

Embodiments of the present application provide a distributed unit migration method and management apparatus, and a communication system. The apparatus is applied to an IAB node, the apparatus comprises a first processing unit, and the first processing unit controls the node to perform the following operation: an F1 terminating donor of the node migrates from a first donor central unit (donor-CU) to a third donor-CU, wherein the first donor-CU is different from the third donor-CU, a radio resource control (RRC) terminating donor of the node is a second donor-CU, the second donor-CU is the same as the first donor-CU, or the second donor-CU is the same as the third donor-CU, or the second donor-CU is different from both the first donor-CU and the third donor-CU.

## Description

### FIELD

Embodiments of the present disclosure relate to the field of communication technologies.

### BACKGROUND

Integrated access and backhaul (IAB) implements a radio relay function in a next generation radio access network (NG-RAN). An integrated access and backhaul node (IAB-node) supports access and backhaul via New Radio (NR). Terminating point of NR backhaul in a network side is called an IAB-donor, which represents a network device (for example, a gNB) having a function of supporting IAB.

An IAB-node may be connected to an IAB-donor via one or more hops. These multi-hop connections form a Directed Acyclic Graph (DAG) topological structure which takes the IAB-donor as a root node. The IAB-donor is responsible for performing centralized resource management, topology management and routing management in an IAB network topology.

The IAB-node supports a function of a gNB-DU (distributed unit), the IAB-node DU is also called an IAB-DU, and the IAB-DU is an endpoint of a radio access (NR) interface to a terminal equipment (UE) and a next-hop IAB-node and is also an endpoint of an F1 protocol to a gNB-CU (central unit) on the IAB-donor. The IAB-DU may serve for a common UE and a child IAB-node. The IAB-DU implements a function of a network side device, is connected to a downstream child IAB-node, provides NR air interface access for a UE and the downstream child IAB-node, and establishes F1 connection to the IAB donor-CU.

In addition to the function of the gNB-DU, the IAB-node also supports some functions of a UE, called an IAB-MT (Mobile Termination), the IAB-MT includes, for example, functions of a physical layer, a layer 2, RRC and NAS to be connected to a gNB-DU of another IAB-node or IAB-donor, and to be connected to a gNB-CU on the IAB-donor and to a core network. The IAB-MT supports such functions as a UE physical layer, access stratum (AS), a radio resource control (RRC) layer and a non-access stratum (NAS), and may be connected to a parent IAB-node.

The IAB-donor is a terminating node on a network side, and the IAB-donor provides network access for an IAB-MT or a UE via a backhaul or access link. The IAB-donor is further divided into an IAB-donor-CU (central unit) and an IAB-donor-DU. The IAB-DU and the IAB-donor-CU are connected via an F1 interface. In an independent networking scenario, the gNB is connected to the IAB-donor-CU via an Xn interface.

To support multi-hop routing forwarding of a data packet, a Backhaul Adaptation Protocol (BAP) sublayer is introduced to the IAB. The BAP sublayer is located above a radio link control (RLC) sublayer and below an IP layer, and supports such functions as a packet destination node and path selection, packet routing forwarding, bearer mapping, flow control feedback, and backhaul link failure notification, etc.

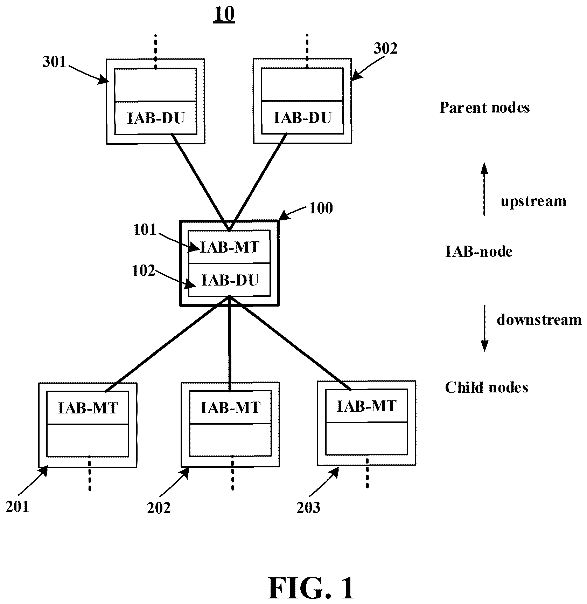

FIG. 1 is a schematic diagram of an IAB parent-child node relationship. As shown in FIG. 1, in an IAB parent-child node relationship structure 10, an IAB-node 100 includes an IAB-MT functional unit 101 and an IAB-DU functional unit 102, neighboring nodes connected to an interface of the IAB-DU functional unit 102 are called child nodes, such as child nodes 201, 202 and 203 shown in FIG. 1, the IAB-DU functional unit 102 may communicate with the child nodes 201, 202 and 203 via an air interface (Uu); neighboring nodes connected to an interface of the IAB-MT functional unit 101 are called parent nodes, such as parent nodes 301 and 302 shown in FIG. 1, the IAB-MT functional unit 101 may communicate with the parent nodes 301 and 302 via the air interface (Uu).

As shown in FIG. 1, a direction from the IAB-node 100 to the child nodes 201, 202, and 203 is called a downstream direction, and a direction from the IAB-node 100 to the parent nodes 301 and 302 is called an upstream direction. An IAB-donor (not shown) performs centralized resource management, topology management and routing management for the IAB topological structure 10.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

In a multi-hop scenario, in order to implement relay forwarding of a data packet, an IAB-node needs to determine a destination node to which the data packet reaches, and then determines a next-hop node corresponding to the destination node according to a routing table and transmits the next-hop node. A donor-CU configures the IAB-node with mapping from each uplink F1-U tunnel initiated by the IAB-node, a non-UE associated F1AP message, a UE-associated F1AP message and non-F1 traffic to a BAP routing identity via F1AP (F1 application protocol) signaling.

The IAB-node determines BAP routing identities corresponding to different types of uplink IP packets initiated from the IAB-node according to routing identity mapping information, and encapsulates BAP subheaders containing BAP routing identity information for these uplink IP packets. The donor-CU configures the donor-DU with mapping from different types of downlink data packets to a BAP routing identity via the F1AP signaling. The donor-DU determines BAP routing identities corresponding to the received downlink IP packets according to the routing identity mapping information, and encapsulates downlink BAP subheaders containing BAP routing identities for these downlink IP packets.

The BAP routing identity includes a destination BAP address and a path identity from the IAB-node to the donor-DU. The BAP address is also called a DESTINATION in a BAP header. Each IAB-node and donor-DU are configured with a BAP address.

At the time of IAB-node initiation (integration), RRC may configure a default backhaul (BH) RLC channel and a default BAP routing identity for non-F1-U traffic. These configurations may be updated in a topology adaptation scenario.

In an upstream direction, the IAB-donor-CU configures the IAB-node with upstream F1 originating from the IAB-node, and non-F1 traffic, and an appropriate BAP routing ID, a next-hop BAP address, as well as a mapping relationship between BH RLC channels. A specific mapping relationship is configured for each F1-U GTP-U tunnel, a non-UE-associated F1AP message, a UE-associated F1AP message, and non-F1 traffic.

The IAB-node may have redundant paths to different IAB-donor-CUs. For an IAB-node that works in a Stand Alone (SA) mode, the IAB-MT and two parent nodes may be allowed to simultaneously have a backhaul link via NR-DC (NR-NR Dual Connectivity), so as to achieve route redundancy of backhaul. Two parent nodes may be connected to different IAB-donor-CUs, these IAB-donor-CUs may control establishment and release of redundant routes passing through the two parent nodes. The gNB-DU function of the parent node, together with a corresponding IAB-donor-CU, gains a role of a master node (MN) and/or a node secondary (SN) of an IAB-MT. A Framework of the NR-DC -- such as a process related an MCG (master cell group)/an SCG (secondary cell group) -- is used to configure dual wireless connection between the IAB-node and the parent node.

IAB-MT may be migrated to a parent node under a different IAB-donor-CU. In this situation, collocated IAB-DU and IAB-DU of the descendant node maintain F1 connection to an original IAB-donor-CU. This migration is called inter-donor partial migration. This IAB-node with IAB-MT migrated to a new IAB-donor-CU is a boundary IAB-node. After the inter-donor partial migration, F1 traffic of the IAB-DU and of the descendant node are routed via a BAP layer of an IAB topology to which the IAB-MT is migrated. The SA mode is capable of supporting the inter-donor partial migration.

When an IAB-node in the SA mode declares RLF of a backhaul link, it may perform RLF recovery at parent nodes under different IAB-donor-CUs. Same as the inter-donor partial migration, collocated IAB-DU and IAB-DU of the descendant node maintain F1 connection to an IAB-donor-CU.

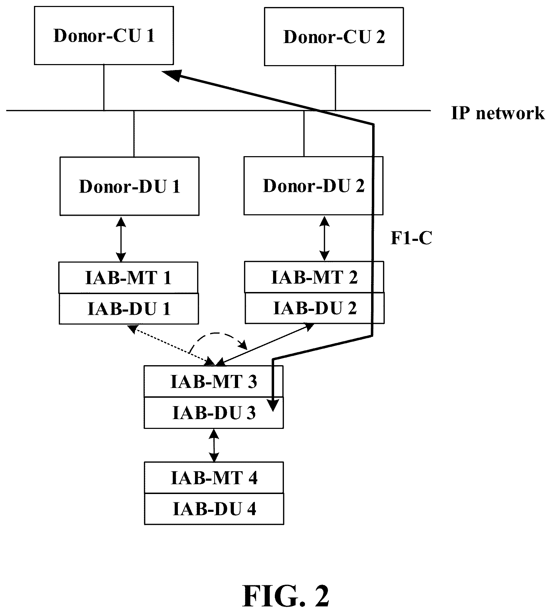

FIG. 2 shows a scenario of partial migration. IAB-node 3 is called a boundary IAB-node. The boundary IAB-node refers to that an RRC interface and F1 interface thereof are terminated to different IAB-donor-CUs. The boundary IAB-node is applicable to partial migration, inter-donor topology redundancy, and inter-donor radio link failure (RLF) recovery. For example, in FIG. 2, a DU of node 3 is terminated to CU1, the MT has RRC connection to CU2, thus meeting the definition of the boundary IAB-node. A descendant IAB-node is a node that is accessed to a network via the boundary IAB-node, and each node is singly connected to its own parent node, such as IAB-node 4. An F1-terminating node refers to a donor-CU that terminates F1 interfaces of the boundary IAB-node and the descendant node, such as donor-CU1 (F1 of IAB-DU3 and IAB-DU4 in FIG. 2 is terminated to donor-CU1). A Non-F1-terminating node refers to a CU that does not terminate F1 interfaces of the boundary IAB-node and the descendant node and has a donor function, such as donor-CU2. Because the non-F1-terminating node and the IAB-MT have RRC connection, the non-F1-terminating node may further be called a donor node of the IAB-MT, and the non-F1-terminating donor CU is also called a donor CU of the IAB-MT.

In FIG. 2, IAB-MT3 changes from single connection to a parent node, IAB-node 1, to single connection to a parent node, IAB-node 2. Both IAB-DU3 and its child node, IAB node 4, still have the F1 connection to donor-CU1, but a path through which the F1 connection passes finally reaches CU1 via the IAB-node 2. In the scenario of partial migration shown in FIG. 2, the boundary node is a migrating node. The partial migration scenario also applies to partial RLF recovery.

Mobility of a mobile IAB (mIAB) or a mobile relay over a larger region faces a challenge: when it is in the process of moving, a donor (i.e., F1-terminating donor) of an IAB needs to be changed, that is, an F1 interface of an IAB-DU needs to be migrated, this migration process is called IAB-DU migration. Packet data convergence protocols (PDCPs) and radio resource control (RRC) connections of terminal equipment (such as user equipment UEs) served by the mobile IAB are affected.

In a DU migration scenario, in order to perform handover of a serving UE, the mobile IAB-node needs to support two logical mobile IAB-DUs simultaneously, these two DUs and a source CU and a target CU have F1AP association respectively.

A UE connected to a mobile IAB-node is handed over from a cell of a logical mobile IAB-DU (i.e., a source logical mobile IAB-DU) having F1AP association with a source CU to a logical mobile IAB-DU (i.e., a target logical mobile IAB-DU) having F1AP association with a target CU.

During a DU migration process, the UE regards cells of two logical DUs as different physical cells (for example, if the cells use the same carrier, then the cells use different PCIs), cells of these two logical DUs use separated physical resources (i.e., different carriers in traditional Layer 1, or orthogonal time and frequency resources in the case of the same carrier).

Inventor of the present disclosure finds that in related arts, a method and a process for implementing DU migration by an IAB-node are not defined.

Embodiments of the present disclosure provide a method and an apparatus for migrating a distributed unit, and a communication system, wherein an F1-terminating donor of an IAB-node is migrated from a first donor central unit (donor-CU) to a third donor-CU different from the first donor-CU, whereby a DU of the IAB-node achieves migration.

According to one aspect of the embodiments of the present disclosure, an apparatus for controlling migration of a distributed unit is provided, applicable to an integrated access and backhaul node (IAB-node), the apparatus including a first processing unit, the first processing unit controlling the node to execute the following operation:
migrating an F1-terminating donor of the node from a first donor central unit (donor-CU) to a third donor-CU,
wherein the first donor-CU is different from the third donor-CU,
and a radio resource control (RRC) terminating donor of the node is a second donor-CU,
the second donor-CU being identical to the first donor-CU, or the second donor-CU being identical to the third donor-CU, or the second donor-CU being different from both the first donor-CU and the third donor-CU.

According to another aspect of the embodiments of the present disclosure, an apparatus for controlling migration of a distributed unit is provided, applicable to a first donor central unit (donor-CU), the apparatus including a second processing unit, the second processing unit controlling the first donor-CU to enable an F 1-terminating donor of an integrated access and backhaul node (IAB-node) to be migrated from the first donor central unit (donor-CU) to a third donor-CU,
wherein the first donor-CU is different from the third donor-CU,
and a radio resource control (RRC) terminating donor of the node is a second donor-CU,
the second donor-CU being identical to the first donor-CU, or the second donor-CU being identical to the third donor-CU, or the second donor-CU being different from both the first donor-CU and the third donor-CU.

According to another aspect of the embodiments of the present disclosure, an apparatus for controlling migration of a distributed unit is provided, applicable to a third donor central unit (donor-CU), the apparatus including a third processing unit, the third processing unit controlling the third donor-CU to enable an F1-terminating donor of an integrated access and backhaul node (IAB-node) to be migrated from a first donor central unit (donor-CU) to the third donor-CU,
wherein the first donor-CU is different from the third donor-CU,
and a radio resource control (RRC) terminating donor of the node is a second donor-CU,
the second donor-CU being identical to the first donor-CU, or the second donor-CU being identical to the third donor-CU, or the second donor-CU being different from both the first donor-CU and the third donor-CU.

According to another aspect of the embodiments of the present disclosure, an apparatus for controlling migration of a distributed unit is provided, applicable to a second donor central unit (donor-CU), the apparatus including a fourth processing unit, the fourth processing unit controlling the fourth donor-CU to enable an F1-terminating donor of an integrated access and backhaul node (IAB-node) to be migrated from the first donor central unit (donor-CU) to a third donor-CU,
wherein the first donor-CU is different from the third donor-CU,
and a radio resource control (RRC) terminating donor of the node is the second donor-CU,
the second donor-CU being identical to the first donor-CU, or the second donor-CU being identical to the third donor-CU, or the second donor-CU being different from both the first donor-CU and the third donor-CU.

Advantageous effect of the embodiments of the present disclosure lies in: being capable of implementing DU migration of an IAB-node.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or shown for one implementation may be used in the same way or in a similar way in one or more other implementations, may be combined with or replace features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF THE DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.
FIG. 1 is a schematic diagram of an IAB parent-child node relationship;
FIG. 2 shows a scenario of partial migration;
FIG. 3 is a schematic diagram of a scenario in which an IAB-node uses a multi-IAB-DU during a DU migration process;
FIG. 4 is a schematic diagram of another scenario in which an IAB-node uses a multi-IAB-DU during a DU migration process;
FIG. 5 is a schematic diagram of a further scenario in which an IAB-node uses a multi-IAB-DU during a DU migration process;
FIG. 6 is a schematic diagram of a migration method of a distributed unit in the embodiments of a first aspect;
FIG. 7 is a schematic diagram of IAB-DU migration;
FIG. 8 is a schematic diagram of a new F1AP process;
FIG. 9 is a schematic diagram of an apparatus for controlling migration of a distributed unit in the embodiments of a second aspect;
FIG. 10 is a schematic diagram of an apparatus for controlling migration of a distributed unit in the embodiments of a third aspect;
FIG. 11 is a schematic diagram of an apparatus for controlling migration of a distributed unit in the embodiments of a fourth aspect;
FIG. 12 is a schematic diagram of an apparatus for controlling migration of a distributed unit in the embodiments of a fifth aspect; and
FIG. 13 is a schematic diagram of composition of an electronic device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as New Radio (NR), Long Term Evolution (LTE), LTE-Advanced (LTE-A), Wideband Code Division Multiple Access (WCDMA), High-Speed Packet Access (HSPA) and so on.

And, communication between devices in a communication system can be carried out according to a communication protocol at any stage, for example may include but be not limited to the following communication protocols: 1G (generation), 2G, 2.5G, 2.75G, 3G, 4G, 4.5G, 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: an Integrated Access and Backhaul node (IAB-node), a relay, a Base Station (BS), an Access Point (AP), a Transmission Reception Point (TRP), a broadcast transmitter, a Mobile Management Entity (MME), a gateway, a server, a Radio Network Controller (RNC), a Base Station Controller (BSC) and so on.

The base station may include but be not limited to: node B (NodeB or NB), evolution node B (eNodeB or eNB) and a 5G base station (gNB), etc., and may further includes Remote Radio Head (RRH), Remote Radio Unit (RRU), a relay or a low power node (such as femeto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "User Equipment (UE)" or "Terminal Equipment (TE) or Terminal Device" refers to, for example, a device that accesses a communication network and receives network services through a network device. The terminal equipment may be fixed or mobile, and may also be referred to as Mobile Station (MS), a terminal, Subscriber Station (SS), Access Terminal (AT), a mobile termination (MT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

Moreover, the term "a network side" or "a network device side" refers to a side of a network, may be a base station, and may include one or more network devices as described above. The term "a user side" or "a terminal side" or "a terminal equipment side" refers to a side of a user or terminal, may be a UE, and may include one or more terminal equipment as described above.

In each embodiment of the present disclosure, upper layer signaling may be e.g. radio resource control (RRC) signaling; for example, is called an RRC message, for example includes an MIB, system information, and a dedicated RRC message; or is called an RRC information element (RRC IE). The upper layer signaling e.g. may further be F1-C signaling, or is called an F1AP protocol. However, the present disclosure is not limited to this.

In the present disclosure, a multi-hop IAB network deployment scenario is used as an example to illustrate each embodiment, multiple terminal equipment (for example, UEs) are connected to an IAB-donor via a multi-hop IAB-node and finally access a network, the network for example is a 5G network.

An IAB-node connected to a terminal equipment (such as a user equipment) is mobile.

Each embodiment of the present disclosure may be used for other mobile nodes, such as relay, etc. Each embodiment of the present disclosure is described by taking IAB as an example.

### Embodiments of a first aspect

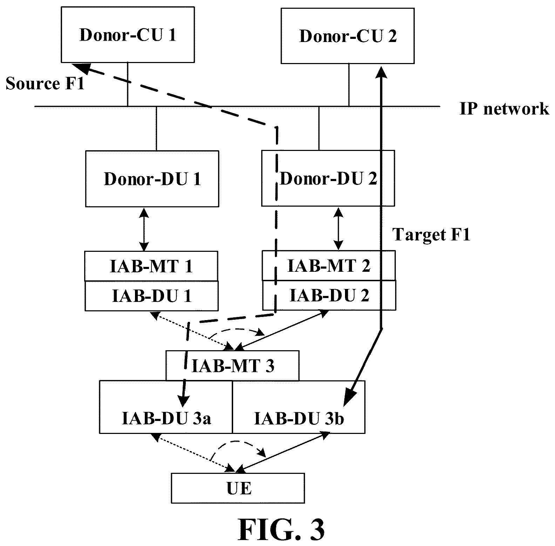

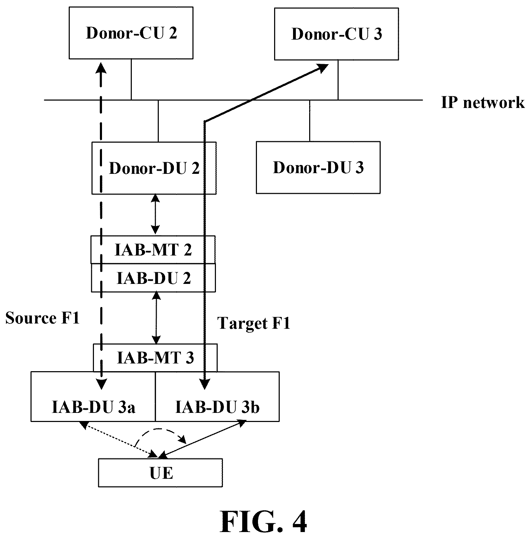

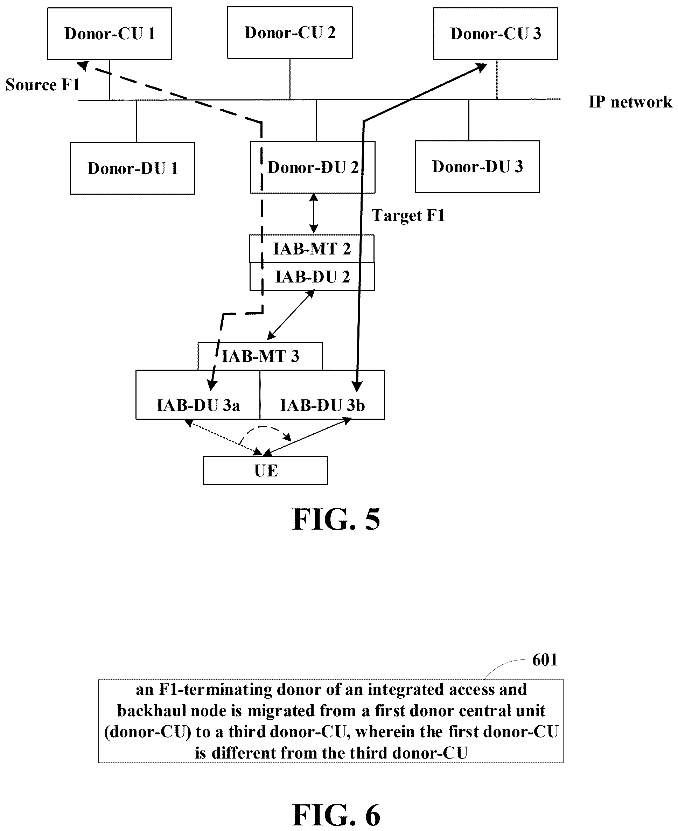

FIG. 3 is a schematic diagram of a scenario in which an IAB-node uses a multi-IAB-DU during a DU migration process. FIG. 4 is a schematic diagram of another scenario in which an IAB-node uses a multi-IAB-DU during a DU migration process. FIG. 5 is a schematic diagram of a further scenario in which an IAB-node uses a multi-IAB-DU during a DU migration process.

As shown in FIG. 3, IAB-node 3 contains two DU parts, i.e., a first IAB-DU and a second IAB-DU. The first IAB-DU in FIG. 3 is IAB-DU3a, which performs F1 connection with a source IAB-donor-CU (donor-CU1). The first IAB-DU may further be called a source IAB-DU, and may be a common IAB-DU that normally does not perform DU migration. The second IAB-DU in FIG. 3 is IAB-DU3b, which performs F1 connection with a target IAB-donor-CU (donor-CU2). The second IAB-DU may further be called a target IAB-DU. These two IAB-DUs may be logical IAB-DUs or virtual IAB-DUs. That is, from the perspective of a terminal equipment (such as a user equipment UE), they are not different from normal IAB-DUs and gNB-DUs, have the functions of normal DUs, but are integrated inside an IAB-node, and an integration method may be determined by implementation. The first IAB-DU and the second IAB-DU may also use a traditional IAB-DU implementation method, that is, physically speaking, just two IAB-DUs.

If the DU migration is taken into account independently, that is, a MT cannot be migrated simultaneously in the process of DU migration, based on an initial migration state of the IAB-node and selection of a target IAB-donor-CU, it may mainly be divided into three scenarios, which are respectively shown in FIG. 3 to FIG. 5.

Scenario 1: corresponding to FIG. 3. Before the DU migration, the IAB-node has been already in a partial migration state (the MT and DUs are controlled by different donor-CUs). The IAB-DU migrates an F1-terminating node to the donor-CU of the IAB-MT. After the DU migration, the MT and DU of the IAB-node (and UEs served by the mobile IAB-node) are terminated to the same donor-CU. This process may further be called full migration.

Scenario 2: corresponding to FIG. 4. Before the DU migration, the MT and DU of the IAB-node (and UEs served by the mobile IAB-node) are terminated to the same donor-CU. IAB-DU switches an F1-terminating node to another donor node. After the DU migration, the IAB-node is in a partial migration state (the MT and DU are controlled by different donor-CUs).

Scenario 3: corresponding to FIG. 5. Before the DU migration, the IAB-node is in a partial migration state. IAB-DU switches an F1-terminating node to a donor-CU different from the donor-CU of the IAB-MT. After the DU migration, the MT and DU of the IAB-node are still in a partial migration state (but the donor-CU of the DU is changed).

In these three scenarios and each embodiment of the present disclosure, a source F1-terminating donor-CU (called a source donor-CU for short) of the IAB-node may be called a first donor-CU, i.e., a donor-CU of a first IAB-DU, for example: in FIGS. 3 and 5, the first donor-CU is Donor-CU1; in FIG. 4, the first donor-CU is Donor-CU2.

In these three scenarios and each embodiment of the present disclosure, a target F1-terminating donor-CU (called a target donor-CU for short) of the IAB-node is called a third donor-CU, i.e., a donor-CU of a second IAB-DU, for example: in FIGS. 4 and 5, the third donor-CU is Donor-CU3; in FIG. 3, the third donor-CU is Donor-CU2.

In these three scenarios and each embodiment of the present disclosure, the donor-CU of the IAB-MT, i.e., a donor-CU for RRC connection of the IAB-MT, is called a second donor-CU, which is Donor-CU2 in FIG. 3 to FIG. 5. The donor-CU of IAB-MT is also called a non-F1-terminating donor-CU when it is not the same as the F1-terminating node.

Scenario 3 may be regarded as a more general scenario, and includes the first donor-CU, the second donor-CU and the third donor-CU. Scenario 1 and Scenario 2 are special cases of Scenario 3, that is: in Scenario 1, Donor-CU2 is both the second donor-CU and the third donor-CU; in Scenario 2, Donor-CU2 is both the first donor-CU and the second donor-CU.

Each embodiment of the present disclosure is described based on the above scenarios. It should be noted that each embodiment of the present disclosure may not be limited to the above scenarios.

Embodiments of the first aspect of the present disclosure provide a migration method of a distributed unit, applicable to a communication system including an IAB-node (such as IAB-node 3 shown in FIG. 5), a first donor-CU (such as donor-CU1 shown in FIG. 5), a second donor-CU (such as donor-CU2 shown in FIG. 5) and a third donor-CU (such as donor-CU3 shown in FIG. 5).

FIG. 6 is a schematic diagram of a migration method of a distributed unit in the embodiments of a first aspect. As shown in FIG. 6, the method includes:
601, an F1-terminating donor of an integrated access and backhaul node (IAB-node) is migrated from a first donor central unit (donor-CU) to a third donor-CU, wherein the first donor-CU is different from the third donor-CU.

In the embodiments of the first aspect, a radio resource control (RRC) terminating donor of the IAB-node is a second donor-CU. The second donor-CU is identical to the first donor-CU, or the second donor-CU is identical to the third donor-CU, or the second donor-CU is different from both the first donor-CU and the third donor-CU.

In the following description:
The IAB-node, for example, is IAB-node 3 shown in FIG. 5, the IAB-node 3 may be called the IAB-node or the node;
The first donor-CU, for example, is donor-CU1 shown in FIG. 5, the first donor-CU may further be called a source F1-terminating donor-CU (called a source donor-CU for short) of the IAB-node, i.e., a donor-CU of the first IAB-DU (such as IAB-DU3a in FIG. 5);
The second donor-CU, for example, is donor-CU2 shown in FIG. 5, the second donor-CU may further be called a donor-CU of the IAB-MT, i.e., a donor-CU for RRC connection of the IAB-MT; wherein the donor-CU of the IAB-MT is also called a non-F1-terminating donor-CU in a case where it is not the same as the F1-terminating node;
The third donor-CU, for example, is donor-CU3 shown in FIG. 5, the third donor-CU may further be called a target F1-terminating donor-CU (called a target donor-CU for short) of the IAB-node, i.e., a donor-CU of the second IAB-DU (such as IAB-DU3b in FIG. 5).

The second IAB-DU (i.e., the target IAB-DU) is also called as a collocated IAB-DU of the first IAB-DU (i.e., the source IAB-DU).

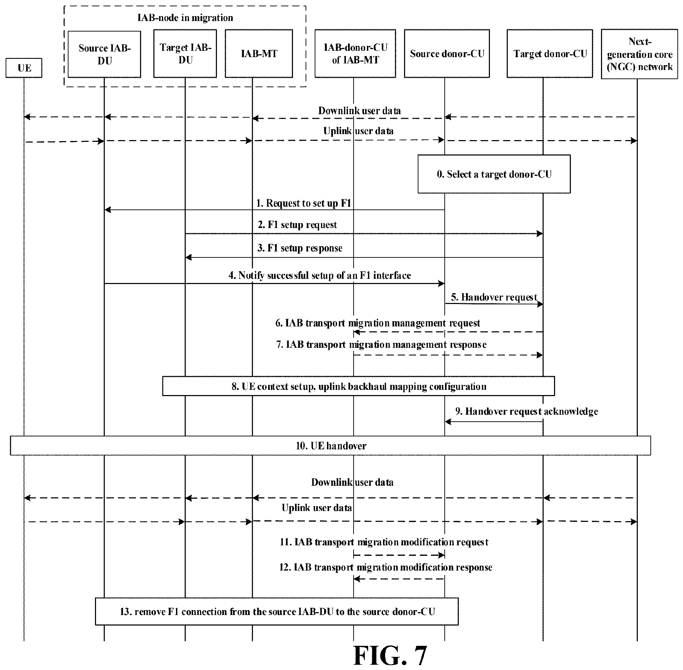

FIG. 7 is a schematic diagram of IAB-DU migration, which is used to implement the operation 601.

As shown in FIG. 7, steps of IAB-DU migration are provided as follows:
Step 0, the source F1-terminating donor-CU (i.e., the first donor-CU) selects the target F1-terminating donor-CU (i.e., the third donor-CU). A specific selection method may be decided based on implementation of the first donor-CU, or based on a pre-configuration, or an Operation Administration and Maintenance (OAM) configuration, etc.

Step 1, the source F1-terminating donor-CU notifies the source IAB-DU (i.e., the first IAB-DU) of information about the target F1-terminating donor-CU via F1AP signaling, thereby the target IAB-DU (the second IAB-DU) requests F1 setup from the target donor-CU, the information about the target F1-terminating donor-CU includes: a TNL address (transport network layer address, i.e., an IP address) and/or a base station identifier (such as a global base station identifier, Global gNB ID), etc.

Step 2, the target IAB-DU transmits an F1 setup request message to the target F1-terminating donor-CU, the message including a BAP address of the IAB-node, one or more cell identifiers of the target IAB-DU, and a base station identifier and/or TNL address of the donor-CU (second donor-CU) of the IAB-MT.

Step 3, the target F1-terminating donor-CU responds an F1 setup response message to the target IAB-DU.

Step 4, the source IAB-DU notifies the source F1-terminating donor-CU of a message regarding successful setup of an F1 interface with the target donor-CU via F1AP signaling. The message may include one or more cell identifiers activated by the target donor-CU. The one or more cell identifiers activated by the target donor-CU may be obtained in Step 3.

Step 5, the source F1-terminating donor-CU transmits a handover request message to the target F1-terminating donor-CU, the message including UE context information. This message is used to apply for handover preparation of a terminal equipment (such as a user equipment UE) served by the IAB-node.

Step 6, if the base station identifier of the second donor-CU received in Step 2 is not a base station identifier of a receiving party (such as the target donor-CU), the target donor-CU transmits an IAB TRANSPORT MIGRATION MANAGEMENT REQUEST message to the donor-CU of the IAB-MT (the donor-CU corresponding to the base station identifier received in Step 2) for F1 transport migration. The IAB TRANSPORT MIGRATION MANAGEMENT REQUEST message includes identity information of the IAB-node, the identity information of the IAB-node e.g. including a non-F1-terminating node UE XnAP ID and/or a BAP address of the IAB-node.

In Step 6, if the identity information of the IAB-node includes non-F1-terminating node UE XnAP ID, the source F1-terminating donor-CU needs to transmit an Xn message in advance to inform the target F1-terminating donor-CU of the UE XnAP ID of the IAB-node at the non-F1-terminating donor-CU. The Xn message may further include information such as the BAP address of the IAB-node and an F1 migration request of the IAB-DU, and is used by the target donor-CU to be well-prepared for resource allocation. The Xn message exchange may be carried out in a previous step, such as in Step 0. The UE XnAP ID of the IAB-node at the non-F1-terminating donor-CU may further be placed in the handover request message of Step 5, that is, a new IE is added to the Xn handover request message, indicating the UE XnAP ID of the IAB-node serving the UE at a target base station (note: "UE" here refers to "IAB-MT"). Traffic profile, quality of service (QoS) parameters, etc. included in the IAB transport migration management request message come from the UE context information in Step 5. If the base station identifier of the second donor-CU received in Step 2 is a base station identifier of a receiving party (such as the target donor-CU), Steps 6 and 7 are skipped.

Step 7, the donor-CU of the IAB-MT transmits an IAB TRANSPORT MIGRATION MANAGEMENT RESPONSE message to the target donor-CU, the message including a Differentiated Services Code Point (DSCP) for downlink traffics, and a mapping configuration of a flow label, and UL Non-F1 Terminating BH Info for configuring an uplink backhaul mapping configuration of the IAB-node. The uplink backhaul mapping configuration refers to an uplink traffic to BAP routing identifier mapping configuration and an uplink traffic to BH RLC channel mapping configuration.

Step 8, the target donor-CU sets up the UE Context on the target IAB-DU via the UE Context Setup process of F1AP, and performs the uplink backhaul mapping configuration for the IAB-node. The UE context information is obtained in Step 5, and information required for the uplink backhaul mapping configuration is obtained in Step 7.

Step 9, the target donor-CU replies a HANDOVER REQUEST ACKNOWLEDGE message to the source donor-CU.

Step 10, A UE handover process is performed, the UE handover process including: a terminal equipment (such as a user equipment UE) accesses to a specified cell of the second IAB-DU according to the received RRCReconfiguration message, SN STATUS TRANSFER, a path switch process, and a UE context release process, etc. The target donor-CU generates an IP header for downlink data based on the DSCP and stream label information received in Step 7.

Step 11, if the donor-CU of the IAB-MT is not the source F1-terminating donor CU, the donor-CU of the IAB-MT (i.e., the second donor-CU) transmits an IAB TRANSPORT MIGRATION MODIFICATION REQUEST message to the source F1-terminating donor-CU, the message including identity information of the IAB-node, which is used to request release of offloaded traffics (for example, full release), that is, all the traffic is revoked to the source donor-CU. The donor-CU of the IAB-MT knows whether the IAB-node has completed F1 transport migration through the traffic offloading process carried out in Steps 6 and 7, thereby may trigger an IAB transport migration modification process to the source donor-CU. If the donor-CU of the IAB-MT is the source F1-terminating donor CU, Steps 11 and 12 are skipped.

Step 12, the source donor-CU replies an IAB TRANSPORT MIGRATION MODIFICATION RESPONSE message to the donor-CU of the IAB-MT.

Step 13, F1 connection from the source IAB-DU to the source donor-CU is removed. F1 removal process may be initiated by the source IAB-DU or may be initiated by the source donor-CU.

In at least one embodiment of the present disclosure, Steps 11 and 12 may be replaced by the IAB Transport Migration Management process, the source donor-CU initiates revocation or release of traffic offloading. For example, the source donor-CU transmits the IAB TRANSPORT MIGRATION MANAGEMENT REQUEST message to the donor-CU of the IAB-MT, the message may include indication information for traffic release (for example, releasing all traffics), the donor-CU of the IAB-MT replies the IAB TRANSPORT MIGRATION MANAGEMENT RESPONSE message. The source donor-CU triggers the IAB transport migration management process through completion of UE handover.

In at least one embodiment of the present disclosure, Step 5 may be performed in parallel with the previous steps, for example, after Step 0.

In at least one embodiment of the present disclosure, Steps 11 and 12 may be performed before Step 13, or Steps 11 and 12 may be performed in parallel with Step 13, or Steps 11 and 12 may be performed after Step 13.

In at least one embodiment of the present disclosure, for Scenario 1, since the target donor-CU and the donor-CU of the IAB-MT are the same node, Steps 6 and 7 do not need to be performed. In this situation, all the information obtained in Step 7 above is generated by the target donor-CU itself internally.

In at least one embodiment of the present disclosure, for Scenario 2, since the source donor-CU and the donor-CU of the IAB-MT are the same node, Steps 11 and 12 do not need to be performed.

In at least one embodiment of the present disclosure, for Steps 1 and 4, they may be implemented in the following way:
The first donor-CU (gNB-CU) transmits first information to the first IAB-DU (gNB-DU), to request a collocated IAB-DU (referring to an IAB-DU on the same IAB-node) of the first IAB-DU, i.e., the second IAB-DU to set up an F1 association with the third donor-CU. The first information includes information of the third donor-CU, including a TNL address and/or a base station identifier, etc. After the F1 setup of the second IAB-DU with the third donor-CU (gNB-CU) is successfully completed, that is, after the second IAB-DU receives the F1 SETUP RESPONSE message from the third donor-CU, the first IAB-DU transmits second information to the first donor-CU, acknowledging that the F1 setup of the collocated IAB-DU (i.e., the second IAB-DU) with the third donor-CU is completed. The second information may include one or more activated cell identifiers, which are obtained from F1 SETUP RESPONSE transmitted by the third donor-CU. If the F1 setup of the second IAB-DU with the third donor-CU fails, that is, the second IAB-DU receives an F1 SETUP FAILURE message from the third donor-CU, the first IAB-DU transmits third information to the first donor-CU, indicating that the F1 setup fails.

The first information, the second information and the third information may use F1AP signaling.

In at least some implementations, an existing F1AP process may be enhanced, for example a gNB-CU Configuration Update process is enhanced. That is, a new information element (IE) is added in a GNB-CU CONFIGURATION UPDATE message to indicate the first information; a GNB-CU CONFIGURATION UPDATE ACKNOWLEDGE message is used or a new IE is added in the message to indicate the second information; a GNB-CU CONFIGURATION UPDATE FAILURE message is used or a new IE is added in the message to indicate the third information. Similarly, a gNB-DU Resource Configuration process may be further enhanced, the first information, the second information and third information are put into a GNB-DU RESOURCE CONFIGURATION message, a GNB-DU RESOURCE CONFIGURATION ACKNOWLEDGE message and a GNB-DU RESOURCE CONFIGURATION FAILURE message, respectively.

In at least some other implementations, a new F1AP process may be added, the new F1AP process uses a non-UE-associated IAB process, the process including a first message, a second message and a third message, such as called a TARGET F1 SETUP message, a TARGET F1 SETUP ACKNOWLEDGE message and a TARGET F1 SETUP FAILURE message respectively, which include the first information, the second information and the third information respectively.

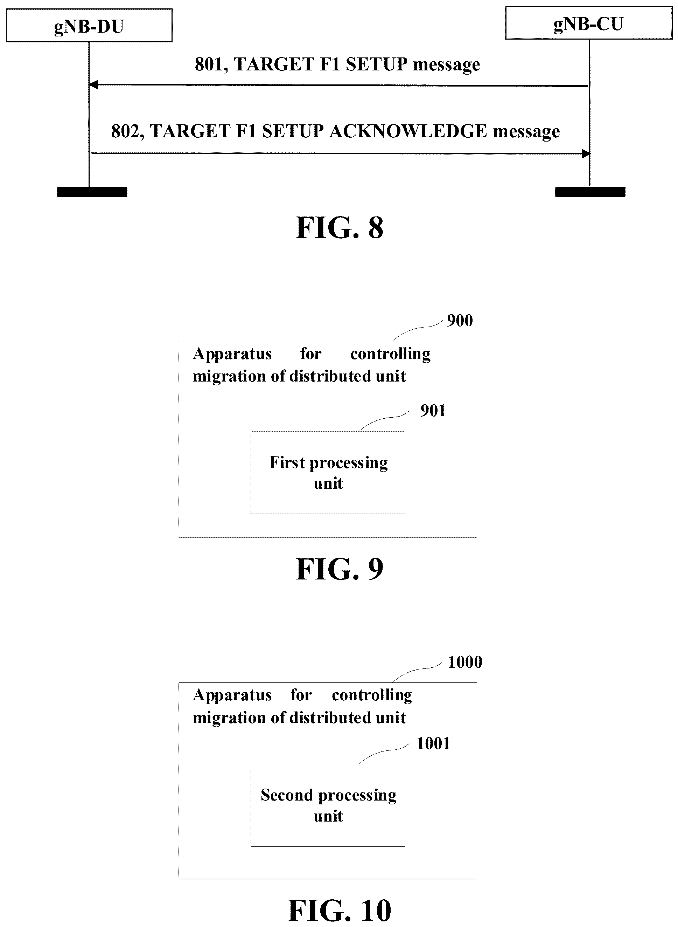

For example, FIG. 8 is a schematic diagram of a new F1AP procedure. As shown in FIG. 8, in the new F1AP procedure, the following steps may be included:
801, the first donor-CU (gNB-CU) transmits a TARGET F1 SETUP message to the first IAB-DU (gNB-DU);
802, in the case of successful operation of the F1AP procedure, the first IAB-DU (gNB-DU) transmits a TARGET F1 SETUP ACKNOWLEDGE message to the first donor-CU (gNB-CU).

Moreover, in the case of failure of the F1AP procedure, the first IAB-DU (gNB-DU) transmits a TARGET F1 SETUP FAILURE message to the first donor-CU (gNB-CU).

If MT and DU migrations are performed simultaneously at the IAB-node, it causes a change in a donor-CU of the MT and a change in a donor-CU of the DU during the process. Such migration process leads to confusion in information exchange among multiple donor-CUs, information may be transmitted to a wrong donor-CU, thereby causing migration to fail.

To solve the aforementioned problems, in at least some embodiments of the present disclosure, simultaneous migration of MT and DU may be avoided through the following method.

In Step 6 of FIG. 7, the donor-CU of the IAB-MT receives the IAB transport migration management request from the target donor-CU to request traffic offloading, which includes identity information of the IAB-node. The donor-CU of the IAB-MT determines that the IAB-node is performing DU migration via the identity information of the IAB-node and the existing traffic offloading association with the source donor-CU. The donor-CU of the IAB-MT avoids from performing handover (MT migration) of the IAB-MT at this point. Or, the target donor-CU transmits an Xn message indication to the donor-CU of the IAB-MT, the message including an identifier message of the IAB-node and being used to indicate not to perform the handover process of the IAB-MT; or, the IAB-node transmits a notification message to the donor-CU of the IAB-MT via RRC signaling, indicating that the IAB node is performing DU migration. In case of Scenario 1, the donor-CU of the IAB-MT is the target donor-CU. Therefore, in Step 2, the donor-CU of the IAB-MT knows that the IAB is performing DU migration, and from this point on, the handover of the IAB-MT may be avoided.

After Step 10 in FIG. 7 (i.e., handover of all UEs is completed), the target donor-CU may notify the donor-CU of the IAB-MT of information about completion of the DU migration via the Xn message or the IAB-node may notify the donor-CU of the IAB-MT of information about completion of the DU migration via the RRC message. In this situation, if necessary, the donor-CU of the IAB-MT may perform handover of the IAB-MT. In case of Scenario 1, the donor-CU of the IAB-MT may independently determine whether it can perform handover of the IAB-MT.

In addition, in FIG. 7, NGC represents a next-generation core network, such as a 5G core network.

Embodiments of the first aspect of the present disclosure solve process problems of DU migration of the IAB-node, thereby being capable of supporting long-distance movement of the IAB-node and improving the performance of users (such as those on cars or trains) served by the IAB-node.

### Embodiments of a second aspect

Embodiments of a second aspect of the present disclosure provide an apparatus for controlling migration of a distributed unit, corresponding to a method for an IAB-node in a method for migration of a distributed unit described in the embodiments of the first aspect. The apparatus is applicable to an IAB-node.

FIG. 9 is a schematic diagram of an apparatus for controlling migration of a distributed unit in the embodiments of a second aspect. As shown in FIG. 9, the apparatus 900 for controlling migration of a distributed unit includes a first processing unit 901, the first processing unit 901 controlling the node to enable the node to execute the following operation:
migrating an F1-terminating donor of the node from a first donor central unit (donor-CU) to a third donor-CU, wherein the first donor-CU is different from the third donor-CU, and a radio resource control (RRC) terminating donor of the node is a second donor-CU, the second donor-CU being identical to the first donor-CU, or the second donor-CU being identical to the third donor-CU, or the second donor-CU being different from both the first donor-CU and the third donor-CU.

In at least one embodiment, the first processing unit controls the node to execute the following operation:
receiving, by a first distributed unit (IAB-DU) of the node, information about the third donor-CU transmitted by the first donor-CU via F1AP signaling.

In at least one embodiment, the first IAB-DU receives first information transmitted by the first donor-CU to request the second IAB-DU to set up F1 association with the third donor-CU, the first information including information about the third donor-CU, and the second IAB-DU is a collocated IAB-DU of the first IAB-DU.

In at least one embodiment, the first information uses F1AP signaling, wherein the first information is a new information element (IE) in the F1AP signaling, or the first information is transmitted using an added new F1AP process.

In at least one embodiment, the information about the third donor-CU includes:
a transport network layer (TNL) address, and/or, a base station identifier.

In at least one embodiment, the first processing unit controls the node to further execute the following operation:
transmitting an F1 setup request message by the second distributed unit (IAB-DU) of the node to the third donor-CU, the second IAB-DU being a collocated IAB-DU of the first IAB-DU.

In at least one embodiment, the F1 setup request message includes a backhaul adaptation protocol (BAP) address of the node, one or more cell identifiers of the second distributed unit (IAB-DU), and a TNL address and/or a base station identifier of the second donor-CU.

In at least one embodiment, the first processing unit controls the node to execute the following operation:
receiving, by the second IAB-DU, an F1 setup response message responded by the third donor-CU.

In at least one embodiment, the first processing unit controls the node to execute the following operation:
notifying by the first distributed unit (IAB-DU) to the first donor-CU via F1AP signaling, a message regarding successful setup of an F1 interface with the third donor-CU.

In at least one embodiment, after the F1 setup between the second IAB-DU and the third donor-CU is completed, the first IAB-DU transmits second information to the first donor-CU to acknowledge that the F1 setup between the second IAB-DU and the third donor-CU is completed.

In at least one embodiment, if the F1 setup between the second IAB-DU and the third donor-CU fails, the first IAB-DU transmits third information to the first donor-CU to indicate that the F1 setup fails.

In at least one embodiment, the second information or the third information uses F1AP signaling,
wherein the second information or the third information is a new information element (IE) in the F1AP signaling, or the second information or the third information is transmitted by using an added new F1AP process.

In at least one embodiment, the message regarding successful setup of an F1 interface with the third donor-CU includes one or more cell identifiers activated by the third donor-CU.

In at least one embodiment, the node receives an uplink backhaul mapping configuration performed by the third donor-CU.

In at least one embodiment, the first processing unit controls the node to execute the following operation:
removing F1 connection from the first IAB-DU to the first donor-CU by the node after the migration is completed.

In at least one embodiment, a removal process is initiated by the first IAB-DU, or is initiated by the first donor-CU.

In at least one embodiment, the first processing unit controls the node to execute the following operation:
transmitting information about start of DU migration by the node to the second donor-CU.

In at least one embodiment, the first processing unit controls the node to execute the following operation:
after the migration is completed, transmitting information about completion of DU migration by the node to the second donor-CU.

### Embodiments of a third aspect

Embodiments of a third aspect of the present disclosure provide an apparatus for controlling migration of a distributed unit, corresponding to a method for a method for a first donor central unit (donor-CU) in a method for migration of a distributed unit described in the embodiments of the first aspect. The apparatus is applied in a first donor central unit (donor-CU).

FIG. 10 is a schematic diagram of an apparatus for controlling migration of a distributed unit in the embodiments of a third aspect. As shown in FIG. 10, an apparatus 1000 for controlling migration of a distributed unit includes a second processing unit 1001, the second processing unit 1001 controlling the first donor-CU to enable an F1-terminating donor of an integrated access and backhaul node (IAB-node) to migrate from the first donor central unit (donor-CU) to a third donor-CU, wherein the first donor-CU is different from the third donor-CU, and a radio resource control (RRC) terminating donor of the node is a second donor-CU, the second donor-CU being identical to the first donor-CU, or the second donor-CU being identical to the third donor-CU, or the second donor-CU being different from both the first donor-CU and the third donor-CU.

In at least one embodiment, the second processing unit controls the first donor-CU to execute the following operation:
notifying the first distributed unit (IAB-DU) of the node of information about the third donor-CU by the first donor-CU via F1AP signaling.

In at least one embodiment, the first donor-CU transmits first information to the first IAB-DU to request the second IAB-DU to set up F1 association with the third donor-CU, the first information including information about the third donor-CU, and the second IAB-DU is a collocated IAB-DU of the first IAB-DU.

In at least one embodiment, the first information uses F1AP signaling, wherein the first information is a new information element (IE) in the F1AP signaling, or the first information is transmitted using an added new F1AP process.

In at least one embodiment, the information about the third donor-CU includes:
a transport network layer (TNL) address, and/or, a base station identifier.

In at least one embodiment, the second processing unit controls the first donor-CU to further execute the following operation:
receiving, by the first donor-CU, a message regarding successful setup of an F1 interface with the third donor-CU, notified by the first distributed unit (IAB-DU) via F1AP signaling.

In at least one embodiment, after the F1 setup between the second IAB-DU and the third donor-CU is completed, the first IAB-DU transmits second information to the first donor-CU to acknowledge that the F1 setup between the second IAB-DU and the third donor-CU is completed.

In at least one embodiment, if the F1 setup between the second IAB-DU and the third donor-CU fails, the first IAB-DU transmits third information to the first donor-CU to indicate that the F1 setup fails.

In at least one embodiment, the second information or the third information uses F1AP signaling,
wherein the second information or the third information is a new information element (IE) in the F1AP signaling, or the second information or the third information is transmitted by using an added new F1AP process.

In at least one embodiment, the message regarding successful setup of an F1 interface with the third donor-CU includes one or more cell identifiers activated by the third donor-CU.

In at least one embodiment, the second processing unit controls the first donor-CU to further execute the following operation:
transmitting a handover request message by the first donor-CU to the third donor-CU.

In at least one embodiment, the first donor-CU transmits an Xn message to the third donor-CU to inform a UE XnAP ID of the node at the second donor-CU.

In at least one embodiment, the handover request message includes user equipment context (UE context) information, and the handover request message is used to apply for preparation for handover of an electronic device served by the node.

In at least one embodiment, the handover request message includes a user equipment Xn interface identifier (non-F1-terminating donor-CU UE XnAP ID) of the node at the second donor-CU.

In at least one embodiment, the second processing unit controls the first donor-CU to further execute the following operation:
in a case where the second donor-CU is different from the first donor-CU,
receiving, by the first donor-CU, an IAB transport migration modification request message transmitted by the second donor-CU.

In at least one embodiment, the IAB transport migration modification request message includes the identity information of the node, and the IAB transport migration modification request message requests for release of offloaded traffics.

In at least one embodiment, the first donor-CU responds an IAB transport migration modification response message to the second donor-CU.

In at least one embodiment, in a case where the second donor-CU is different from the first donor-CU,
transmitting an IAB transport migration management request message by the first donor-CU to the second donor-CU.

In at least one embodiment, the IAB transport migration management request message includes identity information of the node and/or indication information of traffic release.

In at least one embodiment, the first donor-CU receives an IAB transport migration management response message responded by the second donor-CU.

In at least one embodiment, the first donor-CU receives a handover request acknowledge message transmitted by the third donor-CU; and
the first donor-CU hands over a terminal equipment served by the node to the third donor-CU.

In at least one embodiment, the second processing unit controls the first donor-CU to further execute the following operation: removing F1 connection from the first IAB-DU to the first donor-CU.

In at least one embodiment, a removal process is initiated by the first IAB-DU, or is initiated by the first donor-CU.

### Embodiments of a fourth aspect

Embodiments of a fourth aspect of the present disclosure provide an apparatus for controlling migration of a distributed unit, corresponding to a method for a method for a third donor central unit (donor-CU) in a method for migration of a distributed unit described in the embodiments of the first aspect. The apparatus is applied in a third donor central unit (donor-CU).

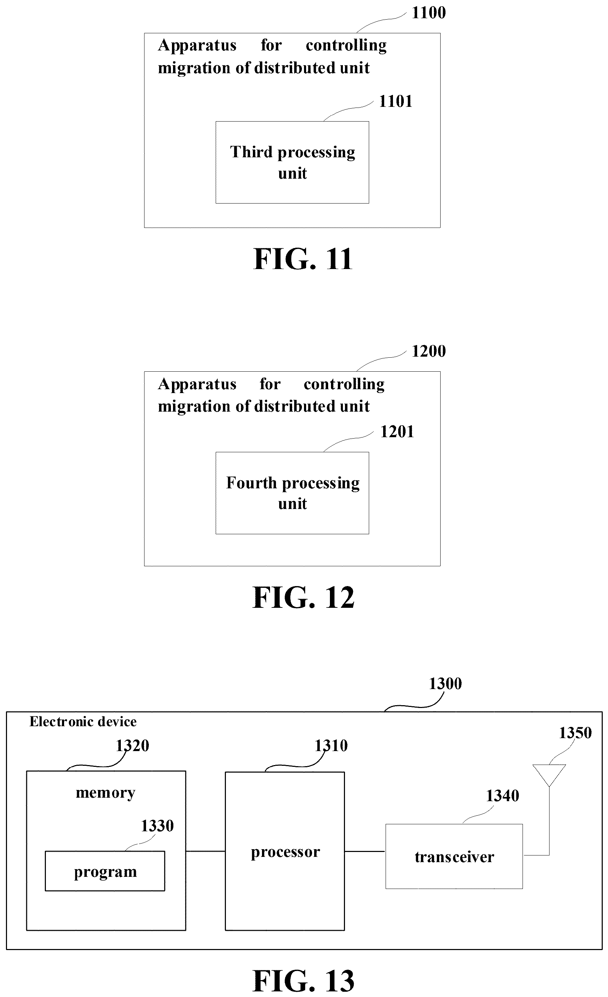

FIG. 11 is a schematic diagram of an apparatus for controlling migration of a distributed unit in the embodiments of a fourth aspect. As shown in FIG. 11, an apparatus 1100 for controlling migration of a distributed unit includes a third processing unit 1101, the third processing unit 1001 controlling the third donor-CU to enable an F1-terminating donor of an integrated access and backhaul node (IAB-node) to migrate from the first donor central unit (donor-CU) to a third donor-CU, wherein the first donor-CU is different from the third donor-CU, and a radio resource control (RRC) terminating donor of the node is a second donor-CU, the second donor-CU being identical to the first donor-CU, or the second donor-CU being identical to the third donor-CU, or the second donor-CU being different from both the first donor-CU and the third donor-CU.

In at least one embodiment, the third processing unit controls the third donor-CU to execute the following operation:
receiving, by the third donor-CU, an F1 setup request message transmitted by the second distributed unit (IAB-DU) of the node.

In at least one embodiment, the F1 setup request message includes a backhaul adaptation protocol (BAP) address of the node, one or more cell identifiers of the second distributed unit (IAB-DU), and a TNL address and/or a base station identifier of the second donor-CU.

In at least one embodiment, the third processing unit controls the third donor-CU to further execute the following operation:
responding, by the third donor-CU, an F1 setup response message to the second IAB-DU,
the first IAB-DU being a collocated IAB-DU of the second IAB-DU.

In at least one embodiment, the third processing unit controls the third donor-CU to execute the following operation:
receiving, by the third donor-CU, a handover request message transmitted by the first donor-CU.

In at least one embodiment, the handover request message includes user equipment context (UE context) information,
and the handover request message is used to apply for preparation for handover of an electronic device served by the node.

In at least one embodiment, the third processing unit controls the third donor-CU to further execute the following operation:
transmitting an IAB transport migration management request message by the third donor-CU to the second donor-CU if the base station identifier of the second donor-CU is not the base station identifier of the third donor-CU.

In at least one embodiment, the third processing unit controls the third donor-CU to further execute the following operation:
transmitting, by the third donor-CU, to the second donor-CU, an indication message indicating the second donor-CU not to perform a process of migration of the mobile termination (IAB-MT) of the node.

In at least one embodiment, the third processing unit controls the third donor-CU to further execute the following operation:
transmitting information about completion of DU migration by the third donor-CU to the second donor-CU.

In at least one embodiment, the IAB transport migration management request message includes identity information of the node.

In at least one embodiment, the identity information of the node including a non-F1-terminating node UE XnAP ID and/or a BAP address of the node.

In at least one embodiment, the third donor-CU receives an Xn message transmitted by the first donor-CU, the Xn message informing a UE XnAP ID of the node at the second donor-CU.

In at least one embodiment, the IAB transport migration management request message includes a traffic profile, the traffic profile being obtained from the handover request message.

In at least one embodiment, the third processing unit controls the third donor-CU to further execute the following operation:
receiving, by the third donor-CU, an IAB transport migration management response message transmitted by the second donor-CU.

In at least one embodiment, the IAB transport migration management response message includes:
a differentiated services code point (DSCP) for a downlink traffic and a flow label; and/or
uplink non-F1 terminating backhaul information (UL non-F1 terminating BH Info) used to configure uplink backhaul mapping configuration of the node.

In at least one embodiment, the third processing unit controls the third donor-CU to further execute the following operation:
setting up a user equipment context on the second IAB-DU via a user equipment context setup (UE context setup) process of F1AP, and performing uplink backhaul mapping configuration for the node, by the third donor-CU.

In at least one embodiment, the third processing unit controls the third donor-CU to further execute the following operation:
generating, by the third donor-CU, an IP header for downlink data based on the differentiated services code point and the flow label information.

In at least one embodiment, the third donor-CU transmits a handover request acknowledge message to the first donor-CU.

### Embodiments of a fifth aspect

Embodiments of a fifth aspect of the present disclosure provide an apparatus for controlling migration of a distributed unit, corresponding to a method for a method for a second donor central unit (donor-CU) in a method for migration of a distributed unit described in the embodiments of the first aspect. The apparatus is applied in a second donor central unit (donor-CU).

FIG. 12 is a schematic diagram of an apparatus for controlling migration of a distributed unit in the embodiments of a fifth aspect. As shown in FIG. 12, an apparatus 1200 for controlling migration of a distributed unit includes a fourth processing unit 1201, the fourth processing unit 1001 controlling the second donor-CU to enable an F1-terminating donor of an integrated access and backhaul node (IAB-node) to migrate from the first donor central unit (donor-CU) to a third donor-CU, wherein the first donor-CU is different from the third donor-CU, and a radio resource control (RRC) terminating donor of the node is a second donor-CU, the second donor-CU being identical to the first donor-CU, or the second donor-CU being identical to the third donor-CU, or the second donor-CU being different from both the first donor-CU and the third donor-CU.

In at least one embodiment, the fourth processing unit controls the second donor-CU to execute the following operation: receiving by the second donor-CU an IAB transport migration management request message transmitted by the third donor-CU if the base station identifier of the second donor-CU is not the base station identifier of the third donor-CU.

In at least one embodiment, the IAB transport migration management request message includes identity information of the node.

In at least one embodiment, the identity information of the node including a non-F1-terminating node UE XnAP ID and/or a BAP address of the node.

In at least one embodiment, the fourth processing unit controls the second donor-CU to execute the following operation:
transmitting an IAB transport migration management response message by the second donor-CU to the third donor-CU.

In at least one embodiment, the IAB transport migration management response message includes:
a differentiated services code point (DSCP) for the third donor-CU to set a downlink traffic, and a flow label; and/or
uplink non-F 1 terminating backhaul information (UL non-F 1 terminating BH Info) used by the third donor-CU to configure uplink backhaul mapping configuration of the node.

In at least one embodiment, the fourth processing unit controls the second donor-CU to further execute the following operation:
avoiding, by the second donor-CU, from performing migration of a mobile termination (IAB-MT) of the node.

In at least one embodiment, the fourth processing unit controls the second donor-CU to further execute the following operation:
receiving an indication message indicating the second donor-CU not to perform a process of migration of the mobile termination (IAB-MT) of the node transmitted by the third donor-CU, or, receiving a notification message indicating that the node is performing DU migration transmitted by the node, by the second donor-CU.

In at least one embodiment, the fourth processing unit controls the second donor-CU to further execute the following operation:
receiving by the second donor-CU, information about completion of DU migration transmitted by the third donor-CU or the node; and
performing the process of migration of the mobile termination (IAB-MT) of the node by the second donor-CU.

In at least one embodiment, the fourth processing unit controls the second donor-CU to further execute the following operation:
in a case where the second donor-CU is different from the first donor-CU,
transmitting an IAB transport migration modification request message by the second donor-CU to the first donor-CU.

In at least one embodiment, the IAB transport migration modification request message includes the identity information of the node,
and the IAB transport migration modification request message requests for release of offloaded traffics.

In at least one embodiment, the second donor-CU receives an IAB transport migration modification response message responded by the first donor-CU.

In at least one embodiment, in a case where the second donor-CU is different from the first donor-CU,
receiving, by the second donor-CU, an IAB transport migration management request message transmitted by the first donor-CU.

In at least one embodiment, the IAB transport migration management request message includes identity information of the node and/or indication information of traffic release.

In at least one embodiment, the second donor-CU responds an IAB transport migration management response message to the first donor-CU.

### Embodiments of a sixth aspect

Embodiments of the present disclosure further provide a communication system, which may include an IAB-node, a first donor central unit CU, a second donor central unit CU and a third donor central unit CU. At least one of a MT of the IAB-node, a DU of the IAB-node, a first donor central unit CU, a second donor central unit CU and a third donor central unit CU may have the composition of the electronic device shown in FIG. 12.

FIG. 13 is a schematic diagram of composition of an electronic device in the embodiments of the present disclosure. As shown in FIG. 13, the terminal equipment 1300 may include: a processor 1310 (such as a central processing unit (CPU)) and a memory 1320; the memory 1320 is coupled to the processor 1310. The memory 1320 may store various data; moreover, further stores a program 1330 for information processing, and executes the program 1330 under the control of the processor 1310. For example, the processor 1310 may be configured to execute a program to control electronic device to implement the method in the embodiments of the first to fourth aspects.

In addition, as shown in FIG. 13, the electronic device 1300 may further include: a transceiver 1340 and an antenna 1350, etc., wherein the functions of said components are similar to relevant arts, which are not repeated here. It's worth noting that the electronic device 1300 does not have to include all the components shown in FIG. 13. Moreover, the electronic device 1300 may also include components not shown in FIG. 13, related arts may be referred to.

Embodiments of the present disclosure further provide a computer program, wherein when the program is executed in at least one of an IAB-node, a first donor central unit CU, a second donor central unit CU and a third donor central unit CU, the program enables at least one of the IAB-node, the first donor central unit CU, the second donor central unit CU and the third donor central unit CU to perform corresponding steps in the method described in the embodiments of the first aspect.

Embodiments of the present disclosure further provide a storage medium in which a computer program is stored, wherein the computer program enables at least one of an IAB-node, a first donor central unit CU, a second donor central unit CU and a third donor central unit CU to perform corresponding steps in the method described in the embodiments of the first aspect.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

As for the implementations including the above embodiments, the following supplements are further disclosed:

### Method of an entire system:

1. A method for migrating a distributed unit, the method including:
   migrating an F1-terminating donor of an integrated access and backhaul node (IAB-node) from a first donor central unit (donor-CU) to a third donor-CU,
   wherein the first donor-CU is different from the third donor-CU,
   and a radio resource control (RRC) terminating donor of the node is a second donor-CU,
   the second donor-CU being identical to the first donor-CU, or the second donor-CU being identical to the third donor-CU, or the second donor-CU being different from both the first donor-CU and the third donor-CU.
2. The method according to supplement 1, wherein the method includes:
   notifying the first distributed unit (IAB-DU) of the node of information about the third donor-CU by the first donor-CU via F1AP signaling.
3. The method according to supplement 2, wherein,
   the first donor-CU transmits first information to the first IAB-DU to request the second IAB-DU to set up F1 association with the third donor-CU, the first information including information about the third donor-CU,
   and the second IAB-DU is a collocated IAB-DU of the first IAB-DU.
4. The method according to supplement 2, wherein,
   the first information uses the F1AP signaling,
   wherein the first information is a new information element (IE) in the F1AP signaling, or the first information is transmitted using an added new F1AP procedure.
5. The method according to supplement 2, wherein,
   the information about the third donor-CU includes:
   a transport network layer (TNL) address, and/or, a base station identifier.
6. The method according to supplement 2, wherein the method further includes:
   transmitting an F1 setup request message by the second distributed unit (IAB-DU) of the node to the third donor-CU.
7. The method according to supplement 6, wherein,
   the F1 setup request message includes a backhaul adaptation protocol (BAP) address of the node, one or more cell identifiers of the second distributed unit (IAB-DU), and a TNL address and/or a base station identifier of the second donor-CU.
8. The method according to supplement 6, wherein the method further includes:
   receiving, by the second IAB-DU, an F1 setup response message responded by the third donor-CU.
9. The method according to supplement 2, wherein the method further includes:
   notifying by the first distributed unit (IAB-DU) to the first donor-CU via F1AP signaling, a message regarding successful setup of an F1 interface with the third donor-CU.
10. The method according to supplement 9, wherein,
   after the F1 setup between the second IAB-DU and the third donor-CU is completed, the first IAB-DU transmits second information to the first donor-CU to acknowledge that the F1 setup between the second IAB-DU and the third donor-CU is completed.
11. The method according to supplement 9, wherein,
   if the F1 setup between the second IAB-DU and the third donor-CU fails, the first IAB-DU transmits third information to the first donor-CU to indicate that the F1 setup fails.
12. The method according to supplement 10 or 11, wherein,
   the second information or the third information uses F1AP signaling,
   wherein the second information or the third information is a new information element (IE) in the F1AP signaling, or the second information or the third information is transmitted by using an added new F1AP process.
13. The method according to supplement 9, wherein,
   the message regarding successful setup of an F1 interface with the third donor-CU includes one or more cell identifiers activated by the third donor-CU.
14. The method according to supplement 8, wherein the method further includes:
   transmitting a handover request message by the first donor-CU to the third donor-CU.
15. The method according to supplement 14, wherein,
   the handover request message includes user equipment context (UE context) information,
   and the handover request message is used to apply for preparation for handover of an electronic device served by the node.
16. The method according to supplement 14, wherein the method further includes:
   transmitting an IAB transport migration management request message by the third donor-CU to the second donor-CU if the base station identifier of the second donor-CU is not the base station identifier of the third donor-CU.
16a. The method according to supplement 16, wherein the method further includes:
   avoiding by the second donor-CU, from performing migration of a mobile termination (IAB-MT) of the node.
16b. The method according to supplement 16, wherein the method further includes:
   receiving an indication message indicating the second donor-CU not to perform a process of migration of the mobile termination (IAB-MT) of the node transmitted by the third donor-CU, or, receiving a notification message indicating that the node is performing DU migration transmitted by the node, by the second donor-CU.
16c. The method according to supplement 16a or 16b, wherein the method further includes:
   receiving by the second donor-CU, information about completion of DU migration transmitted by the third donor-CU or the node; and
   performing the process of migration of the mobile termination (IAB-MT) of the node by the second donor-CU.
17. The method according to supplement 16, wherein,
   the IAB transport migration management request message includes identity information of the node.
18. The method according to supplement 17, wherein,
   the identity information of the node includes a non-F1-terminating node UE XnAP ID and/or a BAP address of the node.
19. The method according to supplement 18, wherein,
   the first donor-CU transmits an Xn message in advance to inform the third donor-CU of a UE XnAP ID of the node at the second donor-CU.
19a. The method according to supplement 19, wherein,
   the Xn message is the handover request message.
20. The method according to supplement 16, wherein,
   the IAB transport migration management request message includes a traffic profile, the traffic profile being obtained from the handover request message.
21. The method according to supplement 16, wherein the method further includes:
   transmitting an IAB transport migration management response message by the second donor-CU to the third donor-CU.
22. The method according to supplement 21, wherein,
   the IAB transport migration management response message includes:
   a differentiated services code point (DSCP) for a downlink traffic and a flow label; and/or
   uplink non-F1 terminating backhaul information (UL non-F1 terminating BH Info) used to configure uplink backhaul mapping configuration of the node.
23. The method according to supplement 21, wherein the method further includes:
   setting up a user equipment context on the second IAB-DU via a user equipment context setup (UE context setup) procedure of F1AP, and performing uplink backhaul mapping configuration for the node, by the third donor-CU.
24. The method according to supplement 23, wherein the method further includes:
   generating an IP header by the third donor-CU for downlink data based on the differentiated services code point and the flow label information.
25. The method according to supplement 21, wherein the method further includes:
   in a case where the second donor-CU is different from the first donor-CU,
   transmitting an IAB transport migration modification request message by the second donor-CU to the first donor-CU.
26. The method according to supplement 25, wherein,
   the IAB transport migration modification request message includes the identity information of the node,
   and the IAB transport migration modification request message requests for release of offloaded traffics.
27. The method according to supplement 25, wherein the method further includes:
   responding an IAB transport migration modification response message by the first donor-CU to the second donor-CU.
28. The method according to supplement 21, wherein the method further includes:
   in a case where the second donor-CU is different from the first donor-CU,
   transmitting an IAB transport migration management request message by the first donor-CU to the second donor-CU.
29. The method according to supplement 28, wherein,
   the IAB transport migration management request message includes identity information of the node and/or indication information of traffic release.
30. The method according to supplement 29, wherein the method further includes:
   responding an IAB transport migration management response message by the second donor-CU to the first donor-CU.
31. The method according to supplement 23, wherein the method further includes:
   transmitting a handover request acknowledge message by the third donor-CU to the first donor-CU; and
   handing over a terminal equipment served by the node by the first donor-CU to the third donor-CU.
32. The method according to supplement 31, wherein the method further includes:
   removing F1 connection from the first IAB-DU to the first donor-CU.
33. The method according to supplement 32, wherein,
   a removal process is initiated by the first IAB-DU, or is initiated by the first donor-CU.

### Method for an IAB-node side:

1. A method for migrating a distributed unit, applicable to an integrated access and backhaul node (IAB-node), the method including:
   migrating an F1-terminating donor of the node from a first donor central unit (donor-CU) to a third donor-CU,
   wherein the first donor-CU is different from the third donor-CU,
   and a radio resource control (RRC) terminating donor of the node is a second donor-CU,
   the second donor-CU being identical to the first donor-CU, or the second donor-CU being identical to the third donor-CU, or the second donor-CU being different from both the first donor-CU and the third donor-CU.
2. The method according to supplement 1, wherein the method includes:
   receiving, by a first distributed unit (IAB-DU) of the node, information about the third donor-CU transmitted by the first donor-CU via F1AP signaling.
3. The method according to supplement 2, wherein,
   the first IAB-DU receives first information transmitted by the first donor-CU to request the second IAB-DU to set up F1 association with the third donor-CU, the first information including information about the third donor-CU,
   and the second IAB-DU is a collocated IAB-DU of the first IAB-DU.
4. The method according to supplement 2, wherein,
   the first information uses the F1AP signaling,
   wherein the first information is a new information element (IE) in the F1AP signaling, or the first information is transmitted using an added new F1AP process.
5. The method according to supplement 2, wherein,
   the information about the third donor-CU includes:
   a transport network layer (TNL) address, and/or, a base station identifier.
6. The method according to supplement 2, wherein the method further includes:
   transmitting an F1 setup request message by the second distributed unit (IAB-DU) of the node to the third donor-CU, the second IAB-DU being a collocated IAB-DU of the first IAB-DU.
7. The method according to supplement 6, wherein,
   the F1 setup request message includes a backhaul adaptation protocol (BAP) address of the node, one or more cell identifiers of the second distributed unit (IAB-DU), and a TNL address and/or a base station identifier of the second donor-CU.
8. The method according to supplement 6, wherein the method further includes:
   receiving, by the second IAB-DU, an F1 setup response message responded by the third donor-CU.
9. The method according to supplement 2, wherein the method further includes:
   notifying by the first distributed unit (IAB-DU) to the first donor-CU via F1AP signaling, a message regarding successful setup of an F1 interface with the third donor-CU.
10. The method according to supplement 9, wherein,
   after the F1 setup between the second IAB-DU and the third donor-CU is completed, the first IAB-DU transmits second information to the first donor-CU to acknowledge that the F1 setup between the second IAB-DU and the third donor-CU is completed.
11. The method according to supplement 9, wherein,
   if the F1 setup between the second IAB-DU and the third donor-CU fails, the first IAB-DU transmits third information to the first donor-CU to indicate that the F1 setup fails.
12. The method according to supplement 10 or 11, wherein,
   the second information or the third information uses F1AP signaling,
   wherein the second information or the third information is a new information element (IE) in the F1AP signaling, or the second information or the third information is transmitted by using an added new F1AP process.
13. The method according to supplement 9, wherein,
   the message regarding successful setup of an F1 interface with the third donor-CU includes one or more cell identifiers activated by the third donor-CU.
14. The method according to supplement 2, wherein,
   the node receives an uplink backhaul mapping configuration performed by the third donor-CU.
15. The method according to supplement 2, wherein the method further includes:
   removing F1 connection from the first IAB-DU to the first donor-CU by the node after the migration is completed.
16. The method according to supplement 15, wherein,
   a removal process is initiated by the first IAB-DU, or is initiated by the first donor-CU.
17. The method according to supplement 2, wherein the method further includes:
   transmitting information about start of DU migration by the node to the second donor-CU.
18. The method according to supplement 17, wherein the method further includes:
   after the migration is completed, transmitting information about completion of DU migration by the node to the second donor-CU.

### Method for a first donor-CU:

1. A method for migrating a distributed unit, applicable to a first donor central unit (donor-CU), the method including:
   migrating an F1-terminating donor of an integrated access and backhaul node (IAB-node) from the first donor central unit (donor-CU) to a third donor-CU,
   wherein the first donor-CU is different from the third donor-CU,
   and a radio resource control (RRC) terminating donor of the node is a second donor-CU,
   the second donor-CU being identical to the first donor-CU, or the second donor-CU being identical to the third donor-CU, or the second donor-CU being different from both the first donor-CU and the third donor-CU.
2. The method according to supplement 1, wherein the method includes:
   notifying the first distributed unit (IAB-DU) of the node of information about the third donor-CU by the first donor-CU via F1AP signaling.
3. The method according to supplement 2, wherein,
   the first donor-CU transmits first information to the first IAB-DU to request the second IAB-DU to set up F1 association with the third donor-CU, the first information including information about the third donor-CU,
   and the second IAB-DU is a collocated IAB-DU of the first IAB-DU.
4. The method according to supplement 2, wherein,
   the first information uses the F1AP signaling,
   wherein the first information is a new information element (IE) in the F1AP signaling, or the first information is transmitted using an added new F1AP process.
5. The method according to supplement 2, wherein,
   the information about the third donor-CU includes:
   a transport network layer (TNL) address, and/or, a base station identifier.
6. The method according to supplement 2, wherein the method further includes:
   receiving, by the first donor-CU, a message regarding successful setup of an F1 interface with the third donor-CU, notified by the first distributed unit (IAB-DU) via F1AP signaling.
7. The method according to supplement 6, wherein,
   after the F1 setup between the second IAB-DU and the third donor-CU is completed, the first IAB-DU transmits second information to the first donor-CU to acknowledge that the F1 setup between the second IAB-DU and the third donor-CU is completed.
8. The method according to supplement 6, wherein,
   if the F1 setup between the second IAB-DU and the third donor-CU fails, the first IAB-DU transmits third information to the first donor-CU to indicate that the F1 setup fails.
9. The method according to supplement 7 or 8, wherein,
   the second information or the third information uses F1AP signaling,
   wherein the second information or the third information is a new information element (IE) in the F1AP signaling, or the second information or the third information is transmitted by using an added new F1AP process.
10. The method according to supplement 6, wherein,
   the message regarding successful setup of an F1 interface with the third donor-CU includes one or more cell identifiers activated by the third donor-CU.
11. The method according to supplement 6, wherein the method further includes:
   transmitting a handover request message by the first donor-CU to the third donor-CU.
11a. The method according to supplement 1, wherein,
   the first donor-CU transmits an Xn message to the third donor-CU to inform a UE XnAP ID of the node at the second donor-CU.
12. The method according to supplement 11, wherein,
   the handover request message includes user equipment context (UE context) information,
   and the handover request message is used to apply for preparation for handover of an electronic device served by the node.
13. The method according to supplement 11, wherein the method further includes:
   in a case where the second donor-CU is different from the first donor-CU,
   receiving, by the first donor-CU, an IAB transport migration modification request message transmitted by the second donor-CU.
14. The method according to supplement 13, wherein,
   the IAB transport migration modification request message includes the identity information of the node,
   and the IAB transport migration modification request message requests for release of offloaded traffics.
15. The method according to supplement 13, wherein,
   the first donor-CU responds an IAB transport migration modification response message to the second donor-CU.
16. The method according to supplement 11, wherein,
   in a case where the second donor-CU is different from the first donor-CU,
   the first donor-CU transmits an IAB transport migration management request message to the second donor-CU.
17. The method according to supplement 16, wherein,
   the IAB transport migration management request message includes identity information of the node and/or indication information of traffic release.
18. The method according to supplement 17, wherein,
   the first donor-CU receives an IAB transport migration management response message responded by the second donor-CU.
19. The method according to supplement 11, wherein,
   the first donor-CU receives a handover request acknowledge message transmitted by the third donor-CU; and
   the first donor-CU hands over a terminal equipment served by the node to the third donor-CU.
20. The method according to supplement 19, wherein,
   F1 connection from the first IAB-DU to the first donor-CU is removed.
21. The method according to supplement 20, wherein,
   a removal process is initiated by the first IAB-DU, or is initiated by the first donor-CU.

### Method for a third donor-CU:

1. A method for migrating a distributed unit, applicable to a third donor central unit (donor-CU), the method including:
   migrating an F1-terminating donor of an integrated access and backhaul node (IAB-node) from a first donor central unit (donor-CU) to the third donor-CU,
   wherein the first donor-CU is different from the third donor-CU,
   and a radio resource control (RRC) terminating donor of the node is a second donor-CU,
   the second donor-CU being identical to the first donor-CU, or the second donor-CU being identical to the third donor-CU, or the second donor-CU being different from both the first donor-CU and the third donor-CU.
2. The method according to supplement 1, wherein the method includes:
   receiving, by the third donor-CU, an F1 setup request message transmitted by the second distributed unit (IAB-DU) of the node.
3. The method according to supplement 2, wherein,
   the F1 setup request message includes a backhaul adaptation protocol (BAP) address of the node, one or more cell identifiers of the second distributed unit (IAB-DU), and a TNL address and/or a base station identifier of the second donor-CU.
4. The method according to supplement 2, wherein the method further includes:
   responding, by the third donor-CU, an F1 setup response message to the second IAB-DU,
   the first IAB-DU being a collocated IAB-DU of the second IAB-DU.
4a. The method according to supplement 1, wherein the method includes:
   receiving by the third donor-CU, a handover request message transmitted by the first donor-CU.
4b. The method according to supplement 4a, wherein,
   the handover request message includes user equipment context (UE context) information,
   and the handover request message is used to apply for preparation for handover of an electronic device served by the node.
5. The method according to supplement 2, wherein the method further includes:
   transmitting an IAB transport migration management request message by the third donor-CU to the second donor-CU if the base station identifier of the second donor-CU is not the base station identifier of the third donor-CU.
5a. The method according to supplement 5, wherein the method further includes:
   transmitting, by the third donor-CU to the second donor-CU, an indication message indicating the second donor-CU not to perform a process of migration of the mobile termination (IAB-MT) of the node.
5b. The method according to supplement 5a, wherein the method further includes:
   transmitting information about completion of DU migration by the third donor-CU to the second donor-CU.
6. The method according to supplement 5, wherein,
   the IAB transport migration management request message includes identity information of the node.
7. The method according to supplement 6, wherein,
   the identity information of the node including a non-F1-terminating node UE XnAP ID and/or a BAP address of the node.
8. The method according to supplement 7, wherein,
   the third donor-CU receives an Xn message transmitted by the first donor-CU, the Xn message informing a UE XnAP ID of the node at the second donor-CU.
9. The method according to supplement 5, wherein,
   the IAB transport migration management request message includes a traffic profile, the traffic profile being obtained from the handover request message.
10. The method according to supplement 5, wherein the method further includes:
   receiving by the third donor-CU, an IAB transport migration management response message transmitted by the second donor-CU.
11. The method according to supplement 10, wherein,
   the IAB transport migration management response message includes:
   a differentiated services code point (DSCP) for a downlink traffic and a flow label; and/or
   uplink non-F1 terminating backhaul information (UL non-F1 terminating BH Info) used to configure uplink backhaul mapping configuration of the node.
12. The method according to supplement 10, wherein the method further includes:
   setting up a user equipment context on the second IAB-DU via a user equipment context setup (UE context setup) process of F1AP, and performing uplink backhaul mapping configuration for the node, by the third donor-CU.
13. The method according to supplement 12, wherein the method further includes:
   generating an IP header by the third donor-CU for downlink data based on the differentiated services code point and the flow label information.
14. The method according to supplement 12, wherein,
   the third donor-CU transmits a handover request acknowledge message to the first donor-CU.

### Method for a second donor-CU:

1. A method for migrating a distributed unit, applicable to a second donor central unit (donor-CU), the method including:
   migrating an Fl-terminating donor of an integrated access and backhaul node (IAB-node) from the first donor central unit (donor-CU) to a third donor-CU, wherein the first donor-CU is different from the third donor-CU,
   and a radio resource control (RRC) terminating donor of the node is the second donor-CU,
   the second donor-CU being identical to the first donor-CU, or the second donor-CU being identical to the third donor-CU, or the second donor-CU being different from both the first donor-CU and the third donor-CU.
2. The method according to supplement 1, wherein,
   the second donor-CU receives an IAB transport migration management request message transmitted by the third donor-CU if the base station identifier of the second donor-CU is not the base station identifier of the third donor-CU.
3. The method according to supplement 2, wherein,
   the IAB transport migration management request message includes identity information of the node.
4. The method according to supplement 3, wherein,
   the identity information of the node including a non-F1-terminating node UE XnAP ID and/or a BAP address of the node.
5. The method according to supplement 2, wherein the method further includes:
   transmitting an IAB transport migration management response message by the second donor-CU to the third donor-CU.
6. The method according to supplement 5, wherein,
   the IAB transport migration management response message includes:
   a differentiated services code point (DSCP) for the third donor-CU to set a downlink traffic, and a flow label; and/or
   uplink non-F1 terminating backhaul information (UL non-F1 terminating BH Info) used by the third donor-CU to configure uplink backhaul mapping configuration of the node.
7. The method according to supplement 2, wherein the method further includes:
   avoiding by the second donor-CU, from performing migration of a mobile termination (IAB-MT) of the node.
8. The method according to supplement 2, wherein the method further includes:
   receiving an indication message indicating the second donor-CU not to perform a process of migration of the mobile termination (IAB-MT) of the node transmitted by the third donor-CU, or, receiving a notification message indicating that the node is performing DU migration transmitted by the node, by the second donor-CU.
8a. The method according to supplement 7 or 8, wherein the method further includes:
   receiving by the second donor-CU, information about completion of DU migration transmitted by the third donor-CU or the node; and
   performing the process of migration of the mobile termination (IAB-MT) of the node by the second donor-CU.
9. The method according to supplement 2, wherein the method further includes:
   in a case where the second donor-CU is different from the first donor-CU,
   transmitting an IAB transport migration modification request message by the second donor-CU to the first donor-CU.
10. The method according to supplement 9, wherein,
   the IAB transport migration modification request message includes the identity information of the node,
   and the IAB transport migration modification request message requests for release of offloaded traffics.
11. The method according to supplement 9, wherein,
   the second donor-CU receives an IAB transport migration modification response message responded by the first donor-CU.
12. The method according to supplement 2, wherein,
   in a case where the second donor-CU is different from the first donor-CU,
   the second donor-CU receives an IAB transport migration management request message transmitted by the first donor-CU.
13. The method according to supplement 12, wherein,
   the IAB transport migration management request message includes identity information of the node and/or indication information of traffic release.
14. The method according to supplement 12, wherein,
   the second donor-CU responds an IAB transport migration management response message to the first donor-CU.

## Claims

1. An apparatus for controlling migration of a distributed unit, applicable to an integrated access and backhaul node (IAB-node), the apparatus comprising a first processing unit, the first processing unit controlling the node to execute the following operations:
migrating an F1 terminating donor of the node from a first donor central unit (donor-CU) to a third donor-CU,
wherein the first donor-CU is different from the third donor-CU,
and a radio resource control (RRC) terminating donor of the node is a second donor-CU,
the second donor-CU being identical to the first donor-CU, or the second donor-CU being identical to the third donor-CU, or the second donor-CU being different from both the first donor-CU and the third donor-CU.

2. The apparatus according to claim 1, wherein the first processing unit controls the node to execute the following operations:
receiving, by the first distributed unit (IAB-DU) of the node, information about the third donor-CU transmitted by the first donor-CU via F1AP signaling,
wherein the first IAB-DU receives first information transmitted by the first donor-CU to request the second IAB-DU to set up F1 association with the third donor-CU, the first information comprising information about the third donor-CU,
and the second IAB-DU is a collocated IAB-DU of the first IAB-DU.

3. The apparatus according to claim 2, wherein the first processing unit further controls the node to execute the following operations:
transmitting an F1 setup request message by the second distributed unit (IAB-DU) of the node to the third donor-CU,
wherein the F1 setup request message comprises a backhaul adaptation protocol (BAP) address of the node, one or more cell identifications of the second distributed unit (IAB-DU), a TNL address and/or a base station identifier of the second donor-CU.

4. The apparatus according to claim 2, wherein the first processing unit controls the node to execute the following operations:
notifying by the first distributed unit (IAB-DU) to the first donor-CU via F1AP signaling, a message regarding successful setup of an F1 interface with the third donor-CU.

5. The apparatus according to claim 1, wherein the first processing unit controls the node to execute the following operations:
clearing the F1 connection from the first IAB-DU to the first donor-CU by the node after the migration is completed.

6. An apparatus for controlling migration of a distributed unit, applicable to a first donor central unit (donor-CU), the apparatus comprising a second processing unit, the second processing unit controlling the first donor-CU so that an F1 terminating donor of an integrated access and backhaul node (IAB-node) is migrated from the first donor central unit (donor-CU) to a third donor-CU,
wherein the first donor-CU is different from the third donor-CU,
and a radio resource control (RRC) terminating donor of the node is a second donor-CU,
the second donor-CU being identical to the first donor-CU, or the second donor-CU being identical to the third donor-CU, or the second donor-CU being different from both the first donor-CU and the third donor-CU.

7. The apparatus according to claim 6, wherein the second processing unit controls the first donor-CU to execute the following operations:
notifying the first distributed unit (IAB-DU) of the node of information about the third donor-CU by the first donor-CU via F1AP signaling.

8. The apparatus according to claim 7, wherein,
the first donor-CU transmits first information to the first IAB-DU to request the second IAB-DU to set up F1 association with the third donor-CU, the first information comprising information about the third donor-CU,
and the second IAB-DU is a collocated IAB-DU of the first IAB-DU.

9. The apparatus according to claim 7, wherein,
the information about the third donor-CU comprises:
a transport network layer (TNL) address, and/or, a base station identifier.

10. The apparatus according to claim 6, wherein the second processing unit further controls the first donor-CU to execute the following operations:
transmitting a handover request message by the first donor-CU to the third donor-CU,
wherein the handover request message comprises user equipment context (UE context) information,
and the handover request message is used to apply for preparation for handover of an electronic device served by the node.

11. The apparatus according to claim 6, wherein,
the first donor-CU transmits an Xn message to the third donor-CU to inform the UE XnAP ID of the node at the second donor-CU.

12. The apparatus according to claim 6, wherein the second processing unit further controls the first donor-CU to execute the following operations:
receiving by the first donor-CU, an IAB transport migration modification request message transmitted by the second donor-CU, the IAB transport migration modification request message requesting for release of offloaded traffics.

13. The apparatus according to claim 6, wherein the second processing unit further controls the first donor-CU to execute the following operations:
transmitting an IAB transport migration management request message by the first donor-CU to the second donor-CU, the IAB transport migration management request message requesting for release of offloaded traffics.

14. An apparatus for controlling migration of a distributed unit, applicable to a third donor central unit (donor-CU), the apparatus comprising a third processing unit, the third processing unit controlling the third donor-CU so that an F1 terminating donor of an integrated access and backhaul node (IAB-node) is migrated from a first donor central unit (donor-CU) to the third donor-CU,
wherein the first donor-CU is different from the third donor-CU,
and a radio resource control (RRC) terminating donor of the node is a second donor-CU,
the second donor-CU being identical to the first donor-CU, or the second donor-CU being identical to the third donor-CU, or the second donor-CU being different from both the first donor-CU and the third donor-CU.

15. The apparatus according to claim 14, wherein the third processing unit controls the third donor-CU to execute the following operations:
receiving by the third donor-CU, a handover request message transmitted by the first donor-CU,
wherein the handover request message comprises user equipment context (UE context) information,
and the handover request message is used to apply for preparation for handover of an electronic device served by the node.

16. The apparatus according to claim 15, wherein the third processing unit further controls the third donor-CU to execute the following operations:
transmitting an IAB transport migration management request message by the third donor-CU to the second donor-CU.

17. The apparatus according to claim 16, wherein,
the IAB transport migration management request message comprises identity information of the node,
the identity information of the node comprising a non-F1-terminating node UE XnAP ID and/or a BAP address of the node.

18. The apparatus according to claim 16, wherein,
the IAB transport migration management request message comprises a traffic profile, the traffic profile being obtained from the handover request message.

19. The apparatus according to claim 16, wherein the third processing unit further controls the third donor-CU to execute the following operations:
receiving by the third donor-CU, an IAB transport migration management response message transmitted by the second donor-CU,
wherein the IAB transport migration management response message comprises:
a differentiated services code point (DSCP) for a downstream traffic and a flow label; and/or
uplink non-F1 terminating backhaul information (UL non-F 1 terminating BH Info) used to configure uplink backhaul mapping configuration of the node.

20. The apparatus according to claim 19, wherein the third processing unit further controls the third donor-CU to execute the following operations:
setting up a user equipment context on the second IAB-DU via a user equipment context setup (UE context setup) process of F1AP, and performing uplink backhaul mapping configuration for the node, by the third donor-CU.
